# EUROPEAN PATENT APPLICATION

(11) **EP 3 628 269 A1**
(43) Date of publication of application: **01.04.2020**
(21) Application number: 19193346.4
(22) Date of filing: 23.08.2019
(51) Int. Cl.: A61C 8/00, A61C 9/00

(54) **DRIVER FOR EMBEDDING ARTIFICIAL TOOTH ROOT, AND ARTIFICIAL TOOTH ROOT WITH DRIVER**

(30) Priority: 28.09.2018 JP 2018185413
(71) Applicant: GC Corporation, Sunto-gun, Shizuoka 410-1307 (JP)
(72) Inventor: TAKADA, Mitsuaki, Itabashi-ku, Tokyo 174-8585 (JP); NAKAO, Kiyotaka, Itabashi-ku, Tokyo 174-8585 (JP); TAKESHITA, Takeharu, Itabashi-ku, Tokyo 174-8585 (JP); HONMA, Tatsuro, Itabashi-ku, Tokyo 174-8585 (JP)
(74) Representative: Müller-Boré & Partner Patentanwälte PartG mbB

(57) **Abstract**

Provide is a device that makes it possible to simplify steps since an artificial tooth root is embedded until an abutment is designed. A driver for embedding an artificial tooth root, the driver transmitting torque to an artificial tooth root when the artificial tooth root is embedded, the driver includes: an artificial tooth root engagement part which is a part engaging with the artificial tooth root; an engagement part on a driving side which is a part connecting to a device that drives the torque; and a scanned part that protrudes from the artificial tooth root, to be a subject of three-dimensional measurement in a posture of embedding the artificial tooth root, and shows a posture of the embedded artificial tooth root.

## Description

### Technical Field

The present invention relates to a driver to transmit torque for embedding an artificial tooth root (generally also referred to as an implant fixture or an implant body) in an alveolar bone in the dental field.

### Background Art

In the dental field, a so-called dental implant technique is often applied as a method for replacing a lost tooth. Application of an artificial tooth root with a dental implant technique has many advantages because being able to lead to a situation where a tooth is more natural than that of a conventional dental prosthesis.

Generally, conventional treatment with an implant is carried out in accordance with the following steps: that is, a hole is made in part of an alveolar bone corresponding to a lost portion to which an implant is to be applied, and an artificial tooth root is embedded in this hole; thereafter part of a gingiva around the embedding hole is sutured; when the embedded artificial tooth root sufficiently unites with the alveolar bone, the part of the gingiva is incised again, an abutment that is a member for fixing a dental prosthesis is attached to the embedded artificial tooth root, and a dental prosthesis is arranged on the abutment.

At this time, the artificial tooth root is often embedded while rotated as a screw. Therefore, a driver for embedding an artificial tooth root which transmits torque to an artificial tooth root is used. A driver for embedding an artificial tooth root has various embodiments: typical embodiments thereof are as in Patent Literature 1 and Patent Literature 2. In short, one end side of the driver engages with an end part of an artificial tooth root, and the other end side thereof is connected to something forming a rotation driving source. Examples of a device forming a rotation driving source include a dental handpiece.

Whereby torque from a rotation driving source is transmitted to a driver for embedding an artificial tooth root, and further transmitted to an artificial tooth root.

### Citation List

### Patent Literature

Patent Literature 1: WO2007/021519
Patent Literature 2: WO2008/045911

### Summary of Invention

### Technical Problem

Here, the above described abutment is a member that is designed and made individually for a patient according to a depth and direction of an embedded artificial tooth root, and a patient's intraoral condition. Since the abutment has to be made according to a state of an actually embedded artificial tooth root, a manner in which an artificial tooth root is embedded has to be known. Therefore, when the abutment is made, information on a posture in which an artificial tooth root is embedded (depth and direction) is transferred to an analog model that is a plaster model including an analog (replica of the artificial tooth root) using a coping, after the artificial tooth root is embedded. The abutment is made based on this analog model.

As is seen from this description, there are many operations since an artificial tooth root is embedded until an abutment is made, which makes it very troublesome to obtain information on a posture of an artificial tooth root. Since some of these operations are carried out intraorally, it is demanded to shorten the time as much as possible in view of sanitation as well.

In view of the problem, an object of the present invention is to provide a device that makes it possible to simplify steps since an artificial tooth root is embedded until an abutment is designed.

### Solution to Problem

As a result of intensive studies of the inventors of the present invention, they conceived an idea of using a driver for embedding an artificial tooth root as a device for grasping a posture of an embedded artificial tooth root. They conceived that composing a driver for embedding an artificial tooth root so as to be able to apply it as a device to grasp a posture of an artificial tooth root as well makes it possible to easily and rapidly embed an artificial tooth root, grasp a posture of an embedded artificial tooth root, and design an abutment. They embodied this idea, to complete the present invention. Hereinafter the present invention will be described.

One aspect of the present invention is a driver for embedding an artificial tooth root, the driver transmitting torque to an artificial tooth root when the artificial tooth root is embedded, the driver comprising: an artificial tooth root engagement part which is a part engaging with the artificial tooth root; an engagement part on a driving side which is a part connecting to a device that drives the torque; and a scanned part that protrudes from the artificial tooth root, to be a subject of three-dimensional measurement in a posture of embedding the artificial tooth root, and shows the posture of the embedded artificial tooth root.

An artificial tooth root with a driver comprising: an artificial tooth root; and the driver for embedding an artificial tooth root, wherein the artificial tooth root engages with the artificial tooth root engagement part may be provided as well.

### Advantageous Effects of Invention

According to the present invention, since a posture of an embedded artificial tooth root can be known with a driver for embedding an artificial tooth root, it is not necessary to make a model having an analog or to install any device especially for being scanned, which has been necessary so far. Thus, it is possible to very rapidly and easily embed an artificial tooth root, grasp the posture of the artificial tooth root, and design an abutment. Further, intraoral operations, and occasions for persons to touch devices can be reduced, which is useful in view of sanitation as well.

### Brief Description of Drawings

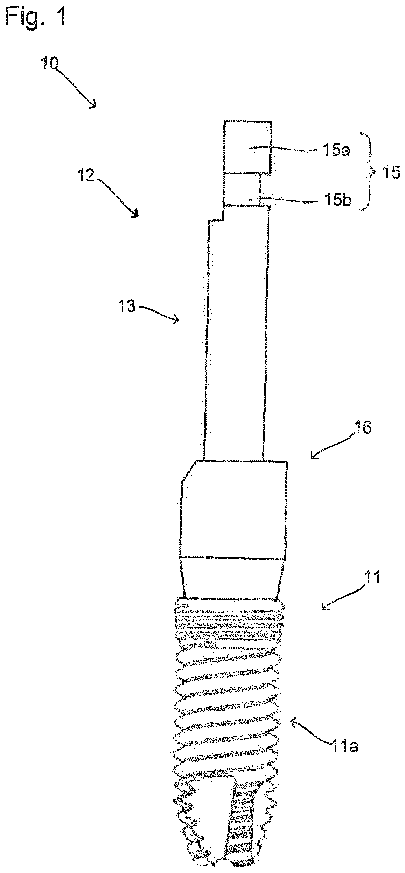

Fig. 1 is a front view of an artificial tooth root with a driver 10.
Fig. 2 is an exploded front view of the artificial tooth root with a driver 10.
Fig. 3 is a perspective view of a driver for embedding an artificial tooth root 12.
Fig. 4 is an explanatory flowchart of a method of producing an abutment S1.
Fig. 5 is an explanatory flowchart of a step of embedding an artificial tooth root S10.
Fig. 6 shows a scene where the artificial tooth root with a driver 10 is attached to a dental handpiece 1.
Fig. 7 is a schematic view showing a scene where the artificial tooth root with a driver 10 is arranged intraorally.
Fig. 8 is an explanatory flowchart of a step of creating three-dimensional data S20.

### Description of Embodiments

Hereinafter the present invention will be described based on embodiments shown in the drawings. The present invention is not limited to these embodiments.

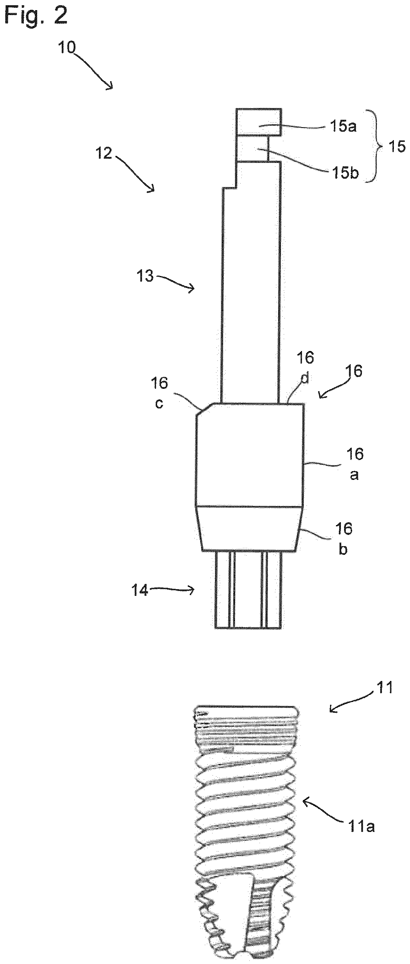

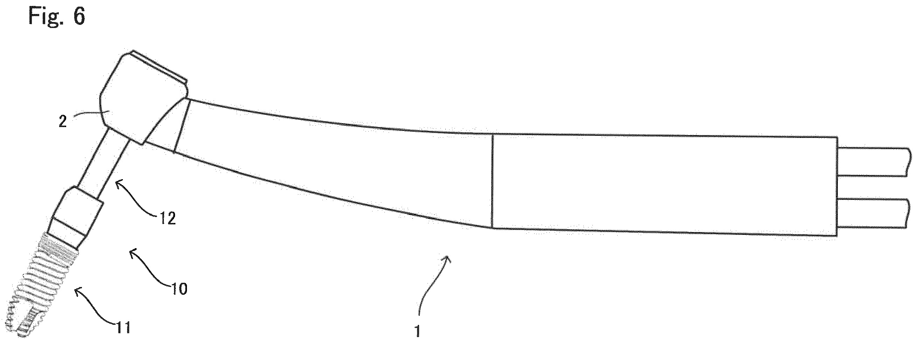

Fig; 1 is a front view of an artificial tooth root with a driver 10 according to one embodiment. Fig. 2 is an exploded front view of the artificial tooth root with a driver 10. The artificial tooth root with a driver 10 of the present embodiment is, as shown in Fig. 6, attached to a dental driving apparatus such as a dental handpiece to be used.

As is seen from these drawings, the artificial tooth root with a driver 10 is constituted of an artificial tooth root 11 and a driver for embedding an artificial tooth root 12.

The artificial tooth root 11, which is also referred to as an implant fixture (fixture) or an implant body, is a member to be embedded in part of an alveolar bone where a tooth is lost to form a base for properly fixing the whole of a dental implant intraorally. The artificial tooth root 11 used here may be any known one.

Therefore, for example, the artificial tooth root 11 has a shape of a tube with a bottom including a hole along the axis, and a screw-like groove 11a for engaging with an alveolar bone is provided for the outer surface thereof. In contrast, a female screw to which a screw for fastening an abutment is screwed is formed inside the tubular shape of the artificial tooth root 11.

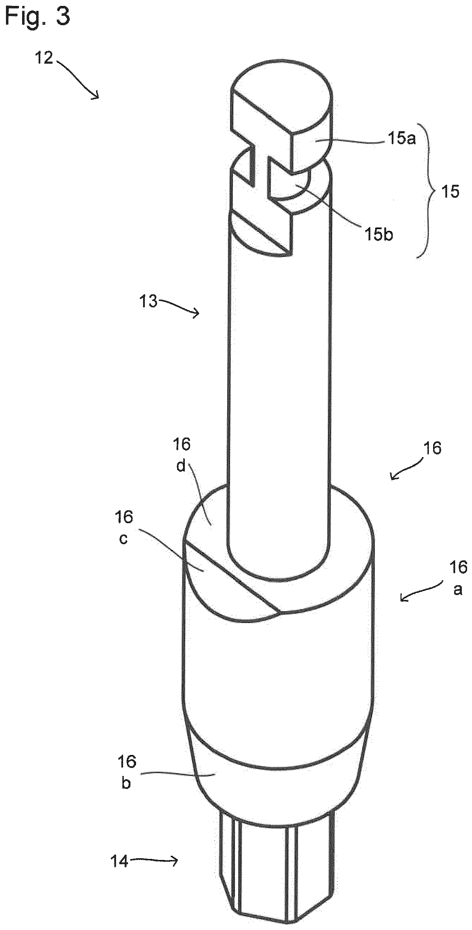

The driver for embedding an artificial tooth root 12 transmits torque from a dental driving apparatus to the artificial tooth root 11, to guide the embedment of the artificial tooth root 11 into an alveolar bone, and after the embedment, is a subject to be scanned which shows information on the posture of the embedded artificial tooth root 11 including the position, the inclination, the direction, and the like, the type thereof, etc. More specific operations will be described later. Fig. 3 shows a perspective view of the driver for embedding an artificial tooth root 12.

Therefore, the driver for embedding an artificial tooth root 12 of the present embodiment is constituted of a shaft part 13 in the form of a bar, an artificial tooth root engagement part 14 provided for one end side of the shaft part 13, an engagement part on the driving side 15 which is provided for the other end side of the shaft part 13, and a scanned part 16.

The artificial tooth root engagement part 14 is a part to be inserted in the hole inside the artificial tooth root 11 to engage with the artificial tooth root 11 in the rotating direction. Whereby, torque is transmitted from the driver for embedding an artificial tooth root 12 to the artificial tooth root 11.

Thus, the embodiment of the artificial tooth root engagement part 14 is determined by the embodiment of the artificial tooth root 11. The artificial tooth root engagement part 14 may be formed through the same approach as that in any known driver for embedding an artificial tooth root. In the present embodiment, the artificial tooth root engagement part 14 in the form of a hexagonal column is shown as an example.

The engagement part on the driving side 15 is formed so as to connect to a dental driving apparatus such as a dental handpiece to receive torque. Thus, in the present embodiment, the engagement part on the driving side 15 has a torque transmission part 15a to which torque is transmitted, and a slipping prevention groove 15b that prevents slipping off a dental driving apparatus such as a dental handpiece.

The embodiment of the engagement part on the driving side 15 may be formed according to an aspect of connection with a dental driving apparatus.

The scanned part 16 is formed so that a three-dimensional shape of at least the scanned part 16 is measured as described later, which makes it possible to obtain a posture of an artificial tooth root, and identify the type of this artificial tooth root as necessary. The embodiment of the scanned part 16 is not specifically restricted as long as a posture and a type of an artificial tooth can be obtained by three-dimensional shape measurement of the scanned part 16. In the present embodiment, the scanned part 16 includes a larger diameter part 16a, an inclination part 16b, and a notch part 16c as an example.

The larger diameter part 16a is a columnar part whose diameter is formed larger than that of the shaft part 13. For example, the direction of the inclining embedded artificial tooth root 11 can be known by the inclination of the outer circumferential face of the larger diameter part 16a. A position of an artificial tooth root in the direction of the axis (position in the depth direction) can be known by the position of a face 16d of the larger diameter part 16a which is on the side of the engagement part on the driving side 15. Other than them, the larger diameter part 16a may be formed so that the type of the artificial tooth root 11 can be identified by the size of the diameter of the larger diameter part 16a, the length thereof in the direction of the axis, and the form of the outer circumference thereof.

In the present embodiment, the larger diameter part 16a is larger than the shaft part 13 in diameter. The present invention is not limited thereto, and a smaller diameter part whose diameter is smaller than that of the shaft part 13 may be provided.

The inclination part 16b is a part provided for the larger diameter part 16a on the side of the artificial tooth root engagement part 14, and having an inclined face whose diameter is smaller as being further from the larger diameter part 16a in the direction of the axis. The inclination part 16b may be formed so that an angle of inclination of an artificial tooth root, a position thereof in the direction of the axis, and a type thereof can be obtained by the angle of the inclined face of this inclination part 16b, the length of the inclined face thereof in the direction of the axis, and the like.

Providing the inclination part 16b on this place prevents the artificial tooth root 11 from being hidden (in a blind spot) by the scanned part 16 when the artificial tooth root 11 is embedded, which makes it possible to secure easy operations.

In the present embodiment, the notch part 16c is provided so as to partially notch an edge of the face 16d of the larger diameter part 16a and the side face thereof. This makes it possible to know the direction of the artificial tooth root 11 in the rotation direction.

A notch is not always necessary as means for obtaining the direction of the artificial tooth root 11 in the rotation direction. For example, a protrusion, a recess, a groove, a pattern, or the like may be provided for a larger diameter part.

In the embodiment, the example of the driver for embedding an artificial tooth root 12 constituted of parts each of which is united has been described. The present invention is not limited thereto. A scanned part that is detachable from the other parts may be provided as a scanned member.

According to this, only providing a scanned member makes it possible for a usual driver for embedding an artificial tooth root which does not include a scanned part to be a driver including a scanned part by fixing the scanned member. Thus, in this case, after an artificial tooth root is embedded with a usual driver for embedding an artificial tooth root, this scanned member can be fixed to this usual driver for embedding an artificial tooth root to be used.

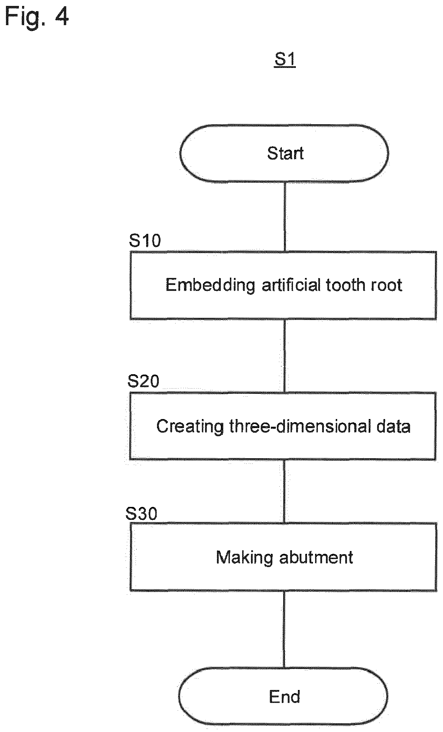

Next, a method for producing an abutment S1, which is one example of a method for producing an abutment using the driver for embedding an artificial tooth root 12, will be described. Fig. 4 shows the flow of the method for producing an abutment S1. As is seen from Fig. 4, the method for producing an abutment S1 includes a step of embedding an artificial tooth root S10, a step of creating three-dimensional data S20, and a step of making an abutment S30. Hereinafter each step will be described.

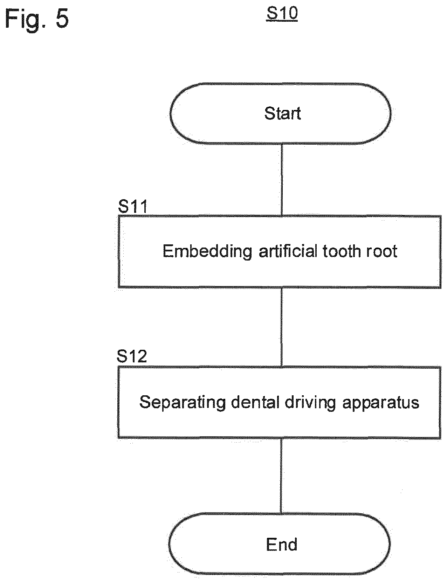

The step of embedding an artificial tooth root S10 includes, as shown in Fig. 5, a step of embedding an artificial tooth root S11, and a step of separating a dental driving apparatus S12.

The step of embedding an artificial tooth root S11 is a step of making a hole into which an artificial tooth root is to be embedded in part of an alveolar bone corresponding to a lost portion of a tooth, to embed the artificial tooth root. In the present embodiment, as shown in Fig. 6, the engagement part on the driving side 15 of the artificial tooth root with a driver 10 is attached to a head 2 of a dental handpiece 1 as a dental driving apparatus, to perform embedment as applying torque to the artificial tooth root 11.

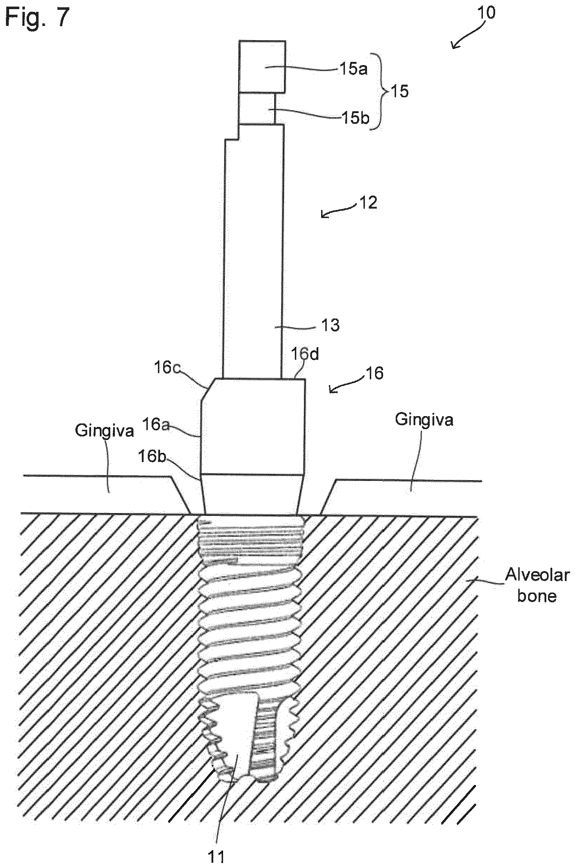

In the step of separating a dental driving apparatus S12, the dental driving apparatus is separated from the embedded artificial tooth root with a driver 10. Fig. 7 is a schematic view of a scene where the artificial tooth root with a driver 10 is arranged. This allows the driver for embedding an artificial tooth root 12 to be arranged so as to protrude from a gingiva in the direction of extending the artificial tooth root 11 that is intraorally embedded.

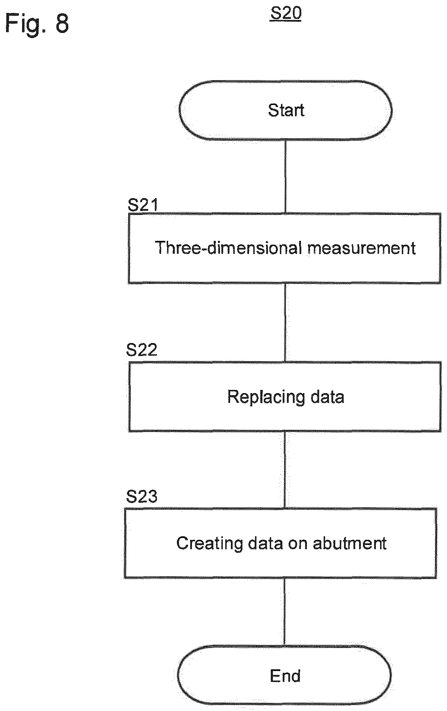

Returning to Fig. 4, the description will be continued. The step of creating three-dimensional data S20 is a step of creating three-dimensional shape data of the abutment to be produced. The step of creating three-dimensional data S20, for example, may be carried out as shown in Fig. 8. That is, the step of creating three-dimensional data S20 includes a step of three-dimensional measurement S21, a step of replacing data S22, and a step of creating data on an abutment S23.

The step of three-dimensional measurement S21 is a step of carrying out three-dimensional measurement on the form of the inside surface of an oral cavity to which the artificial tooth root with a driver 10 is attached. This makes it possible to obtain the intraoral shape around which the artificial tooth root with a driver 10 is attached to, and the shape of the protruding driver for embedding an artificial tooth root 12 from a gingiva which is attached there, especially the scanned part 16, as three-dimensional data. An intraoral three dimensional measuring device may be used to obtain intraoral three-dimensional data.

After the data is obtained, the driver for embedding an artificial tooth root 12 is separated from the artificial tooth root 11.

The step of replacing data S22 is a step of replacing, with three-dimensional shape data of an artificial tooth root and three-dimensional shape data of the scanned part 16, which are prepared in advance, data of each corresponding part in the three-dimensional shape data obtained in the step of three-dimensional measurement S21. That is, a place of the intraoral three-dimensional data where the scanned part 16 is arranged is replaced with the three-dimensional shape data of the scanned part 16, which is prepared in advance, as applying the prepared data to the place. At this time, the replacement is carried out especially by correlating the shapes of the larger diameter part 16a, the inclination part 16b, and the notch part 16c.

The three-dimensional shape data of the artificial tooth root 11, which is prepared in advance, is also applied to a place of the artificial tooth root 11, whose position can be drawn because the artificial tooth root 11 is fitted into the scanned part 16.

According to the driver for embedding an artificial tooth root 12 of the present embodiment, since the driver for embedding an artificial tooth root 12 shows the posture of the embedded artificial tooth root 11 including the position, the inclination, and the direction, and the type thereof as necessary, it is not necessary to make a model having an analog or to install a device especially for scanning again, which has been necessary so far. Therefore, the operations since embedding an artificial tooth until grasping the posture of the embedded artificial tooth can be performed with the driver for embedding an artificial tooth root 12, which makes it possible to very rapidly and easily perform the operations since embedding an artificial tooth root until designing an abutment.

The artificial tooth root 11 and the driver for embedding an artificial tooth root 12 are united and are not necessary to be separated before embedment until scanning is completed, which keeps their positional relationship fixed, and makes it possible to obtain information on embedment of an artificial tooth root with high accuracy.

Further, intraoral operations, and occasions for persons to touch devices can be reduced, which is useful in view of sanitation as well.

A step of creating data on an abutment S23 is a step of creating data of a shape of an abutment suitable for a patient based on the three-dimensional shape data obtained so far. Specifically, since the replacement with high accuracy can be performed in the step of replacing data S22, such improved accuracy is properly reflected on data on an abutment, which makes it possible to create data on an abutment which is more suitable for a patient.

Returning to Fig. 4, the description will be continued. The step of making an abutment S30 is a step of making an abutment based on the three-dimensional shape data created in the step of creating three-dimensional data S20. In this step, for example, an abutment is made with high accuracy by offering the three-dimensional data to a NC machine tool such as a machining center.

### Reference Signs List

- 10: artificial tooth root for a driver
- 11: artificial tooth root
- 12: driver for embedding an artificial tooth root
- 13: shaft part
- 14: artificial tooth root engagement part
- 15: engagement part on the driving side
- 16: scanned part

## Claims

1. A driver for embedding an artificial tooth root, the driver transmitting torque to an artificial tooth root when the artificial tooth root is embedded, the driver comprising:
an artificial tooth root engagement part which is a part engaging with the artificial tooth root;
an engagement part on a driving side which is a part connecting to a device that drives the torque; and
a scanned part that protrudes from the artificial tooth root, to be a subject of three-dimensional measurement in a posture of embedding the artificial tooth root, and shows a posture of the embedded artificial tooth root.

2. An artificial tooth root with a driver comprising:
an artificial tooth root; and
the driver for embedding an artificial tooth root according to claim 1,
wherein the artificial tooth root engages with the artificial tooth root engagement part.
